# FASCICULE DE BREVET EUROPEEN

(11) **EP 0 446 093 B1**
(45) Date de publication et mention de la délivrance du brevet: **15.12.1993**
(21) Numéro de dépôt: 91400466.8
(22) Date de dépôt: 21.02.1991
(51) Int. Cl.: B60S 1/48

(54) **Réchauffeur de liquide de lave-glace sur circuit de liquide de refroidissement du moteur**
Erwärmer für Scheibenwaschflüssigkeit für Motorkühlflüssigkeitskreislauf
Heater for windscreen washer liquid, using the liquid in the engine cooling system

(30) Priorité: 28.02.1990 FR 9002613
(43) Date de publication de la demande: 11.09.1991
(73) Titulaire: CAOUTCHOUC MANUFACTURE ET PLASTIQUES, F-78000 Versailles (FR)
(72) Inventeur: Bechu, Jean-Pierre, F-92400 Courbevoie (FR)

(56) Documents cités:
- EP-A- 0 005 414
- EP-A- 0 243 216

## Description

L'invention concerne un échangeur thermique pour le chauffage de l'eau d'une installation de lave-glace sur véhicule automobile, utilisant le circuit de refroidissement du moteur.

Parmi les accessoires destinés à améliorer le confort de la conduite automobile, le lavage des glaces par pulvérisation d'eau améliore à un tel point l'effet des essuie-glaces que son emploi a été rendu obligatoire sur les pare-brises des véhicules les plus récents. Or son efficacité disparaît totalement au-dessous de zéro degré, par givrage des buses de projection, limite abaissée par l'usage d'un liquide antigel. Néanmoins, de nombreuses inventions proposent un réchauffage dudit liquide, améliorant l'efficacité du lavage même lorsqu'un antigel repousse le risque de bouchage des buses, ce qui d'ailleurs provoque un risque plus grave encore, de givrage instantané du liquide projeté sur un pare-brise trop froid, le rendant dangereusement opaque.
Aussi un bon chauffage de ce liquide s'avère opportun, entre le réservoir qui le stocke sous le capot moteur et les buses de projection, la pompe électrique commandée par le conducteur étant souvent située dans le couvercle du réservoir, ou plus loin, sur le circuit constitué de tuyaux plastiques par exemple en nylon polyamide technique.

On connait des moyens de chauffage par résistance électrique, tels ceux décrits dans les documents DE-A-2 642 301 de BECKER ou US-A-4,575,003 de HOTSHOT AUTO PRODUCTS qui proposent un chauffage par résistance électrique en combinaison avec une dérivation du circuit de refroidissement.
Ces dispositifs présentent l'inconvénient de nécessiter une régulation de sécurité, limitant l'échauffement de la résistance. La plupart des autres inventions proposées dans ce domaine utilisent, comme source de chaleur, le circuit de refroidissement du moteur, lui-même régulé à une température qui ne provoque aucun dégât si le liquide de lave-glace séjourne longtemps à cette température.

Le document FR 2.389.520 de HAGUS C. LUCHTENBERG propose un échangeur adaptable, plaqué par une surface de contact à un radiateur existant. Le document FR 2.447.302 de FERODO décrit la modification de la boîte à eau dans un radiateur. Le document FR 2.436.045 de P. AUTEROCHE suggère d'adapter un échangeur au bouchon de radiateur ou bien au carter moteur.

Ces trois documents proposent donc des dispositifs additionnels, ne cherchant pas à modifier le circuit de refroidissement conçu par le constructeur, mais qui se prêtent difficilement à une fabrication de grande série ou à un montage simple, compatibles avec les exigences de production de l'industrie automobile.

D'autres documents décrivent l'incorporation d'un accessoire sur le circuit normal de circulation de l'eau de refroidissement : le document FR-A-2 605 273, de VALEO, par un soufflet déformable en spirale enfilé autour de la canalisation, le document FR-A-2 416 142, de P. AUTEROCHE, par un manchon métallique interposé, comprenant un serpentin tubulaire et le document FR-A-2 129 629, de NITTERL, assurant la même fonction sur le circuit de réchauffage du carburateur.

Il en est de même, des documents FR-A-2 406 177 de KEPLER et EP-A-0 271 821 de Muller, qui prévoient l'incorporation au circuit d'une boîte, réalisée en deux parties assemblées étanches et contenant un serpentin tubulaire, enroulé en spirale autour du canal où circule l'eau, sans gêner la pleine section du courant. Le premier est une boîte métallique estampée et assemblée par brasure ou soudage, il revendique une disposition en cylindres étagés permettant de s'adapter à divers diamètres de tubulures. Le second est, préférentiellement, formé de demi-cylindres, en aluminium coulé, boulonnés de façon étanche et où le serpentin est fixé par des raccords avec bagues d'étanchéité à serrage radial.

Les dispositifs de l'art antérieur demandent donc des raccordements supplémentaires de canalisations souples à des accessoires rigides, ce que, précisément, les constructeurs d'automobiles cherchent à éviter, avec tous les aléas dus aux colliers ou autres procédés de raccordement, qui doivent être démontables ou remplaçables. Le coût de l'accessoire additionnel, mais aussi des colliers, des coupes à longueur et de la main d'oeuvre supplémentaire, au montage comme à la réparation, peut rendre l'opération dissuasive au regard du fait qu'il s'agit d'une fonction tout à fait auxiliaire dont la valeur ajoutée doit rester modérée.

Recherchant une fiabilité à faible coût, la demanderesse a obtenu le brevet EP-A-0 243 216, concernant un dispositif de branchement et/ou de raccordement de canalisations souples dans les circuits de liquide de refroidissement ou autres fluides sur véhicules automobiles. L'invention qui y est décrite, basée sur le frettage des extrémités de canalisations souples par la contraction d'un enveloppage externe de polymère rigide, permet la constitution de raccordements de tubulures de diamètres identiques ou différents, ou constitués de matériaux différents, mais aussi la prise de dérivations ou raccords en té et la réalisation économique des vis de purge.

La présente invention a pour objectif d'utiliser une technologie analogue pour incorporer un échangeur thermique, introduit à très faibles frais dans un dispositif réducteur de diamètre ou raccord en té ou adaptation de purge, déjà nécessité par l'implantation du circuit de refroidissement. Ledit échangeur thermique assure, de ce fait, le réchauffage de l'eau du lave-glace par un positionnement modifiant le moins possible l'implantation des circuits de fluide.

L'invention a trait à un réchauffeur du liquide de lave-glace disposé sur circuit de refroidissement du moteur pour véhicule automobile, constitué d'au moins un serpentin d'échangeur en tube rigide enroulé en hélice autour du canal où circule le liquide de refroidissement, ledit circuit comportant un dispositif de branchement et/ou de raccordement de canalisations souples montées entre une tubulure interne rigide et un élément d'enveloppage externe en un matériau polymérique, de nature élastomérique, thermoplastique ou thermodurcissable.

L'invention est caractérisée en ce que ledit serpentin d'échangeur, disposé autour de la tubulure interne rigide, est noyé au sein du matériau polymérique constituant l'élément d'enveloppage externe.

Différents modes de réalisation de l'invention sont spécifiés dans les revendications dépendantes 2 à 4.

L'invention sera mieux comprise à la lecture de la description accompagnant les dessins, dans lesquels :
- la figure 1 est la vue, par ses coupes 1a et 1b, d'une tubulure raccordant deux canalisations souples de même diamètre et équipée d'un serpentin d'échangeur selon l'invention ;
- la figure 2 montre un piquage sur circuit de refroidissement comportant entrée et retour d'une dérivation destinée au chauffage de l'habitacle, dont la tubulure interne est équipée d'un serpentin d'échangeur selon l'invention ;
- la figure 3 illustre le cas, dans les mêmes conditions de représentation, où le circuit de refroidissement est équipé d'une vis de purge pour l'air ;
- la figure 4 montre une autre variante à piquage latéral unique sur le circuit de refroidissement.

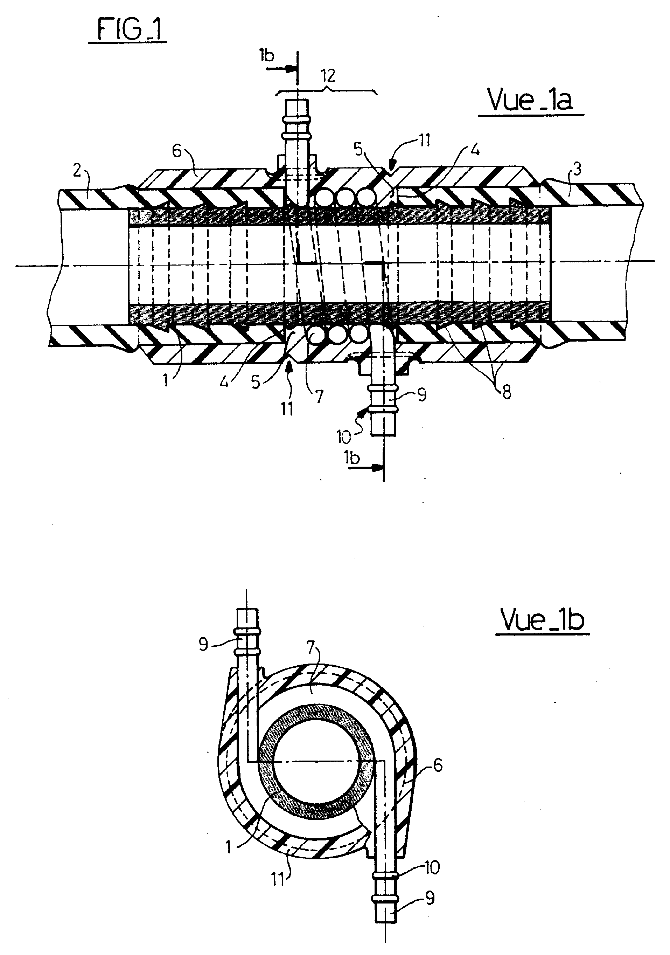

La figure 1 est constituée d'une coupe axiale en vue 1a et une coupe perpendiculaire en vue 1b d'un raccord simple entre deux tubulures de même diamètre, nécessité, par exemple, pour relier un raccord coudé et un long tuyau lui faisant suite, éventuellement réalisés en matériaux différents pour des raisons d'ambiances thermiques différentes, telle que la proximité d'un collecteur d'échappement par exemple.

Une tubulure interne rigide (1) raccorde, par emmanchement préalable, des canalisations souples (2) et (3) qui viennent buter par leurs faces planes (4), sur le serpentin d'échangeur (7).

L'hélice formant serpentin d'échangeur (7) est constituée, dans cette variante, par trois tours et demi d'un tube rigide de faible diamètre, préférentiellement métallique. Ce tube rigide, à spires jointives dans cette variante simple, est avantageusement réalisé à partir de tubes en acier cuivré utilisés en automobile soit comme canalisation de freinage, soit comme partie rigide des tubes à essence.

Lors du surmoulage de l'ensemble formé par la tubulure interne rigide (1) équipée du serpentin d'échangeur (7) et sur laquelle sont montées les extrémités des canalisations souples (2) et (3), par le matériau polymérique de l'élément d'enveloppage externe (6), il se forme un épaulement cylindrique (5) qui assure le confinement simultané des extrémités des canalisations souples (2) et (3) et du serpentin d'échangeur (7), ainsi que l'étanchéité aux fluides.
Le diamètre intérieur du serpentin d'échangeur (7) est conformé sur un mandrin, ce qui permet de le monter facilement autour de la tubulure interne rigide (1), éventuellement équipée de cannelures (8) pour améliorer la tenue ultérieure des canalisations souples (2) et (3).

L'élasticité en torsion d'un tel "cor de chasse" permet de franchir lesdites cannelures et de disposer le serpentin d'échangeur (7) pour servir de butée aux canalisations souples (2) et (3).

La vue 1b, en deux demi-coupes perpendiculaires à l'axe de révolution, du canal où passe l'eau du circuit de refroidissement montre les deux sorties tangentes (9) du serpentin d'échangeur (7), dont la position précise est obtenue par la tenue en place lors de la fermeture du moule. Une cannelure ou forme d'olive (10) est réalisée éventuellement pour une meilleure tenue du tuyau de lave-glace, le plus souvent en polyamide technique, sur chaque sortie tangente (9) où il est emmanché lors de l'assemblage sur voiture. La température maintenue volontairement plus élevée que dans les usages antérieurs nécessite éventuellement une meilleure fixation, par formage à chaud, renfort de plastique adhésif ou circlip métallique formant collier sur ce tuyau de lave-glace où le serpentin d'échangeur (7) vient s'interposer entre pompe électrique et buses de pulvérisation le plus souvent. L'emplacement du dispositif est choisi de façon à modifier le moins possible les circuits, préférentiellement dans leur zone de plus grande proximité, ou le plus près possible des buses de pulvérisation, ce qui évite au mieux leur blocage par le gel.

L'élément d'enveloppage externe (6) est réalisé soit en un matériau polymérique de nature élastomérique dont la réticulation se produit au cours de l'opération de surmoulage, soit d'un matériau polymérique thermoplastique ou thermodurcissable.

En cas d'emploi d'un polymère à retrait géométrique au refroidissement notable, c'est-à-dire au moins égal à 1 % de son diamètre initial, deux gorges (11) sont ménagées dans l'épaisseur de l'élément d'enveloppage externe (6).
En effet, la contrainte élastique permanente des extrémités des canalisations souples (2) et (3), due au retrait géométrique de l'élément d'enveloppage externe (6), pourrait être contrecarrée par l'appui, à travers le serpentin d'échangeur (7), de la partie cylindrique centrale (12) dudit élément d'enveloppage externe (6).

La surépaisseur formant l'épaulement cylindrique (5), lorsque le matériau polymérique imprègne, au moulage, l'hélice du serpentin d'échangeur (7), remplissant ainsi tous les interstices et défauts de coupe sur les faces planes (4) des canalisations souples (2) et (3), contraint en effet fortement lors du refroidissement la partie centrale de la tubulure interne rigide (1).
Une différence d'élasticité volumétrique entre les canalisations souples (2) et (3), frettées par l'enveloppage externe (6), et la partie cylindrique centrale (12) de ce dernier qui noie le serpentin d'échangeur (7) est permise, avec quelque déformabilité élastique, par l'existence des deux gorges (11).

En conséquence, la partie cylindrique centrale (12) est intimement serrée, par une surface importante, sur la tubulure interne rigide (1), qui est constituée d'un matériau polymérique rigide, résistant à la pression de moulage, tel qu'un polyamide 6-6 renforcé de fibres courtes. Ce choix, de préférence à un métal pour des raisons de risque de corrosion par le liquide de refroidissement moteur, apporte une faible conductibilité thermique à l'échangeur, à travers la masse du matériau polymérique de l'élément d'enveloppage externe (6) qui englobe, lui, intimement le serpentin d'échangeur (7) constitué d'un tube métallique.

Mais en réalité les capacités calorifiques en jeu sont telles qu'il est inutile de chercher à améliorer, éventuellement par incorporation de charges appropriées, ladite conductibilité thermique des matériaux polymériques, car ils sont baignés, et à grand débit, dans le liquide de refroidissement moteur, l'ensemble étant porté en permanence à la température de ce dernier.

Cette stabilité thermique ne serait même pas aussi bien assurée par un boîtier métallique sujet aux variations rapides de température dans le liquide de refroidissement.

En utilisation, le faible débit du liquide de lave-glace ayant séjourné longtemps dans le serpentin d'échangeur (7), et donc bien réchauffé, est totalement incapable de refroidir notablement ses parois.

Par ailleurs, la régulation de température prévue sur le moteur rend impossible une ébullition gênante du liquide, éventuellement très alcoolisé, qui est utilisé pour des propriétés antigel et nettoyantes dans le circuit de lave-glace.

L'échangeur thermique, ainsi réalisé selon l'invention, est préférentiellement disposé sur un circuit privilégié de chauffage de l'habitacle (non utilisé en période chaude) ou bien de préchauffage du carburateur (alimenté en priorité par rapport au radiateur).

Pour ces différentes raisons, la canalisation comporte, le plus souvent, à cet emplacement soit un piquage en té de plus petit diamètre que celui du circuit principal, soit avec vis de purge située souvent en point haut, proche des tuyaux de lave-glace.

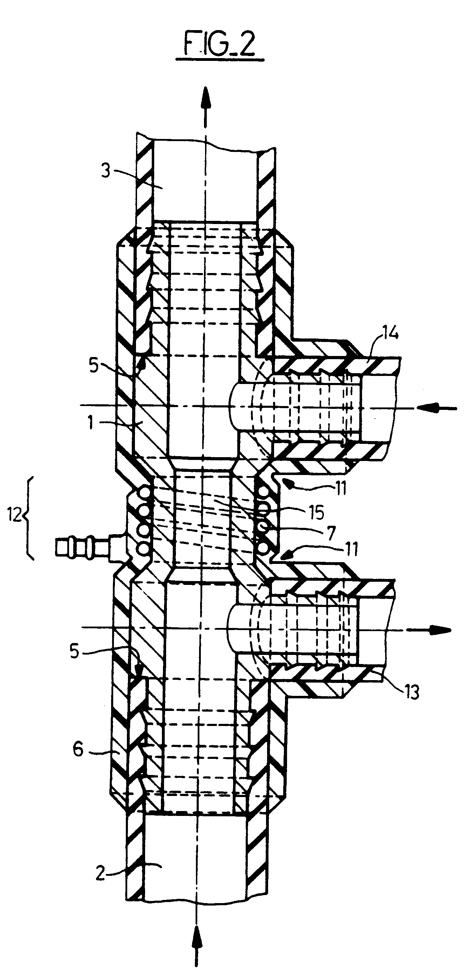

La figure 2 montre, encore en coupe axiale, une disposition particulière d'un piquage, sur circuit de refroidissement, d'une dérivation destinée au chauffage de l'habitacle. En effet, l'équilibrage des débits conduit, dans certaines applications, à créer une perte de charge au moyen d'un diaphragme de plus faible diamètre ménagé dans la tubulure interne rigide (1) lorsqu'un piquage latéral (13) dérive une partie du débit principal amené par la canalisation souple d'entrée (2). Le débit partiel, revenant par le piquage de retour (14), rejoint la canalisation souple de sortie (3).
Il est alors tout naturel d'utiliser, moyennant une longueur accrue tout au plus de deux centimètres par rapport au strict nécessaire, cette zone rétrécie (15) de la tubulure interne rigide (1) pour placer le serpentin d'échangeur (7).

Celui-ci, dans cette application, doit être enroulé, préalablement, au montage, sur ladite tubulure interne rigide (1) par déformation plastique sur la zone rétrécie (15) limitée par deux épaulements compris entre les deux canalisations souples (2) et (3) du circuit principal.
Les gorges (11) peuvent se montrer utiles en cas d'utilisation, pour l'élément d'enveloppage externe (6) d'un matériau polymérique à retrait thermique notable, afin d'éviter le blocage géométrique dudit retrait autour d'éléments présentant des élasticités volumétriques différentes.

Le "cor de chasse", formé, avec une précision peut-être limitée, par une machine à enrouler utilisant des tronçons de tube prédécoupés à longueur, est serré en place par la fermeture du moule.

Cependant l'orientation réciproque des sorties tangentes (9) et de l'axe des piquages (13) et (14) doit être choisie différente pour permettre le montage des canalisations souples sur les piquages (13) et (14).

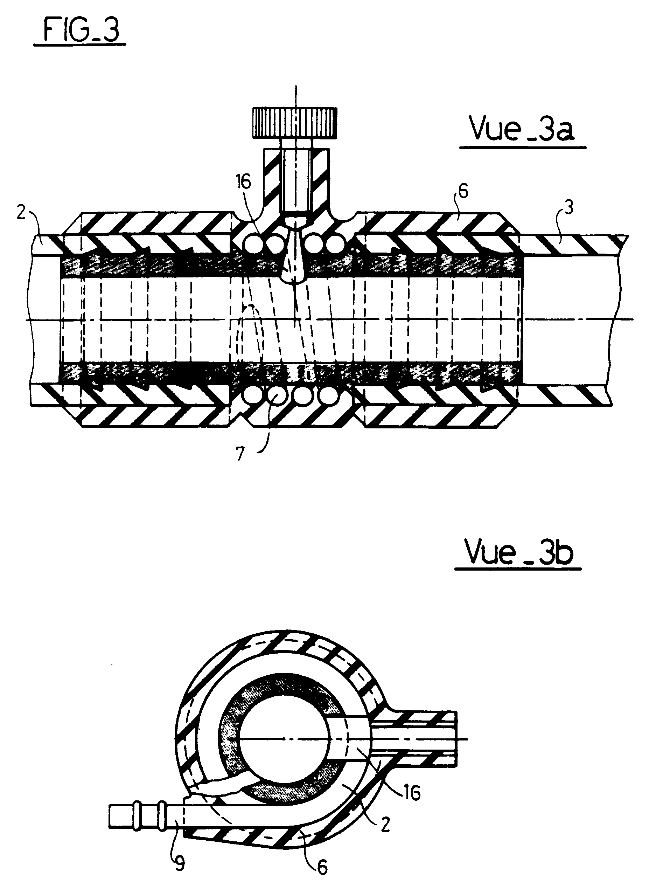

La figure 3 illustre, dans les mêmes conditions géométriques que les variantes précédentes, le cas d'un point haut de circuit de refroidissement moteur, équipé d'une vis de purge d'air. L'usage d'un serpentin d'échangeur (7) est alors possible à la seule condition de ménager, entre ses spires enroulées, un passage (16) au moyen d'un noyau dans le moule servant à la réalisation de l'élément d'enveloppage externe (6). Une solution peut faire appel uniquement à l'élasticité propre du "cor de chasse" enroulé à spires approximativement jointives de part et d'autre d'un noyau amovible en forme d'aiguille ou de lame plate enfermée dans le moule.

En effet le passage (16), ménagé par l'écartement élastique entre spires peut, sur la vue 3a, ne pas dépasser quelques millimètres par exemple.

La vue 3b est une coupe perpendiculaire partielle montrant que ledit passage (16) peut être nettement plus grand, dans le sens circonférentiel, grâce à l'existence d'un noyau plat, rétractable au démoulage vers l'axe de la tubulure, et qui vient buter sur un autre noyau destiné à amorcer l'alésage de la vis de purge, même si cet alésage doit être supérieur à la largeur du noyau plat. Les spires entourant le passage (16) peuvent être rendues jointives par la poussée lors du montage des canalisations souples (2) et (3) et bloquées ensuite par le surmoulage du matériau polymérique constituant l'élément d'enveloppage externe (6).

Les hélices de tube métallique de faible diamètre destinées à former le serpentin d'échangeur (7) seraient ainsi identiques pour un grand nombre de variantes, rendant d'autant plus économique l'incorporation de l'échangeur thermique dans plusieurs types de raccordement.

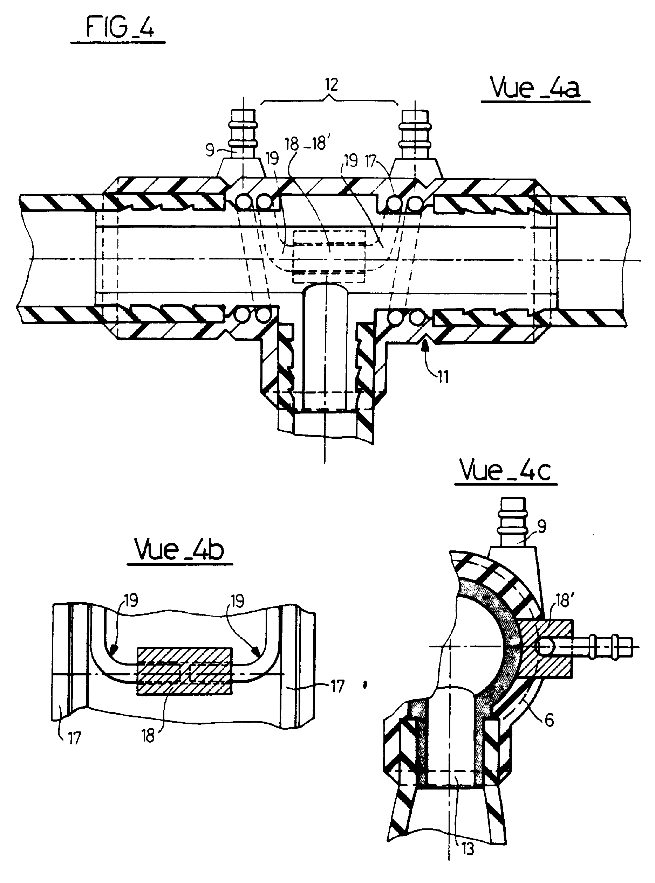

La figure 4 montre une variante dans laquelle le serpentin d'échangeur (17) doit laisser le passage, sur plusieurs centimètres, à un piquage latéral (13) unique. L'une des solutions, représentée en vue 4a, est d'engager deux "cors de chasse" sur la partie cylindrique centrale (12) de la tubulure rigide interne (1), de chaque côté du piquage latéral (13). Chaque sortie tangente (9) du côté extérieur est maintenue dans le moule de la même façon que décrit précédemment et les deux sorties centrales (19) disposées du côté intérieur, de part et d'autre du piquage latéral (13), sont reliées ensemble, lors de l'assemblage, par une pièce de jonction (18) ou (18′) noyée ensuite dans le matériau polymérique qui, lors du moulage, constitue l'élément d'enveloppement externe (6).
Cette façon de procéder permet, sans modification majeure du moule de production, à la pièce de jonction (18) soit de constituer seulement une partie cylindrique parallèle à l'axe, soit de prendre une forme de té avec un embout analogue à celui des sorties tangentes (9).

Dans le premier cas, représenté par la vue 4b, les deux parties hélicoïdales du serpentin d'échangeur (17), constituées par exemple de deux tours et demi de tube rigide, sont disposées en série et mises bout à bout par l'alésage de la pièce de jonction (18) ; une entrée et une sortie du liquide de lave-glace utilisant les deux sorties tangentes (9) sont interposées sur les tuyaux de lave-glace reliant la pompe au gicleur, ou à un té prévu par le constructeur entre deux gicleurs.

Le second cas, représenté par la vue 4c, est une façon d'incorporer ce dernier té à l'ensemble décrit, la pièce de jonction (18′) servant de dérivation pour deux circuits symétriques, parcourus en parallèle par le liquide de lave-glace vers deux buses, au moindre coût.

L'étanchéité sommaire pratiquée en engageant lors du montage les sorties centrales (19) des deux parties hélicoïdales, coudées d'équerre par rapport au serpentin d'échangeur (17), dans l'alésage de la pièce de jonction (18) ou (18′), est achevée en noyant ce raccordement dans la matière polymérique lors du surmoulage de l'élément d'enveloppage externe (6). Les gorges (11) sont alors opportunes pour compenser les différences de déformabilité élastique des différentes parties de ce dernier élément.

Les procédés de fabrication d'un réchauffeur de liquide selon l'invention sont conséquences des caractéristiques propres au produit fini. La tubulure interne rigide est, dans chaque cas, réalisée dans un matériau composite résistant à la pression à des températures supérieures à 200°C, préférentiellement en polyamide 6-6 renforcée de fibres de courtes.
Le serpentin d'échangeur est enroulé, soit sur la tubulure interne rigide dans une variante, soit sur un mandrin de diamètre approprié et engagé ultérieurement sur ladite tubulure interne rigide lors de la préparation.

Les canalisations souples sont alors engagées jusqu'à buter sur ledit serpentin d'échangeur.
L'opération suivante est le surmoulage du matériau polymérique pour réaliser l'élément d'enveloppage externe. Le refroidissement presque instantané permet un cycle de moulage rapide, fonction de la nature du matériau polymérique, sur des machines de production en grande série, ne différant que par les moules adaptés à chaque application ; le surmoulage de l'élément d'enveloppage externe se fait avec une étanchéité entre le moule et les canalisations souples sortant librement desdits moules.

Le réchauffeur du liquide de lave-glace, objet de la présente invention, présente, par rapport aux dispositifs connus de l'art antérieur, les avantages suivants :
- intégré au dispositif de raccordement des canalisations souples du circuit de refroidissement du moteur, il ne nécessite aucun surcoût d'installation d'accessoires et de modification du circuit de refroidissement ;
- noyé au sein du matériau polymérique constituant l'élément d'enveloppage externe et, de ce fait, bien protégé, il offre toute garantie de fiabilité, ne demande aucune opération de maintenance et se trouve à l'abri des blessures éventuelles lors de réparations du moteur ;
- utilisant le circuit de refroidissement du moteur, il ne nécessite ni résistance électrique ni équipement de sécurité, limitant, de ce fait, les risques pour l'utilisateur.

En résumé, le réchauffeur du liquide de lave-glace, objet de l'invention, constitue un élément de confort pour le conducteur automobile, alliant à la sécurité une fiabilité au moindre coût.

Les différentes combinaisons des variantes décrites mettent à la disposition de l'homme de l'art la possibilité de satisfaire toutes géométries demandées par les constructeurs automobiles sans sortir du cadre de l'invention, du moment qu'elle reste définie par les revendications.

## Revendications

1. Réchauffeur du liquide de lave-glace sur circuit de liquide de refroidissement du moteur pour véhicule automobile, constitué d'au moins un serpentin d'échangeur en tube métallique enroulé en hélice autour du canal où circule le liquide de refroidissement, ledit circuit comportant un dispositif de branchement et/ou de raccordement de canalisations souples (2) et (3) montées entre une tubulure rigide interne (1) et un élément d'enveloppage externe (6) en un matériau polymérique, de nature élastomérique, thermoplastique ou thermodurcissable ledit réchauffeur du liquide de lave-glace étant caractérisé en ce que ledit serpentin d'échangeur (7) ou (17), disposé autour de la tubulure interne rigide (1), est noyé au sein du matériau polymérique constituant l'élément d'enveloppage externe (6).

2. Réchauffeur du liquide de lave-glace selon la revendication 1, caractérisé en ce que le serpentin d'échangeur (7) ou (17) sert de butée aux deux canalisations souples (2) et (3) raccordées par ladite tubulure interne rigide (1), avant d'être noyé dans le matériau polymérique qui forme alors l'épaulement cylindrique (5) servant au confinement desdites canalisations souples (2) et (3).

3. Réchauffeur du liquide de lave-glace selon la revendication 1, caractérisé en ce que le serpentin d'échangeur (17) est constitué de deux hélices de tube rigide fonctionnant en parallèle du fait de leur raccordement en té par une pièce de jonction (18′) sur le circuit du liquide de lave-glace.

4. Réchauffeur du liquide de lave-glace selon l'une des revendications 1 à 3, caractérisé en ce que des gorges (11) à la surface extérieure de l'élément d'enveloppage externe (6) permettent de compenser les différences de déformabilité élastique dans les zones de recouvrement des canalisations souples (2) et (3) et dans la partie cylindrique centrale (12) contenant, noyé, le serpentin d'échangeur (7) ou (17) lorsque l'élément d'enveloppage externe (6) est constitué d'un matériau polymérique thermoplastique à retrait thermique notable.

## Patentansprüche

1. Vorwärmeeinrichtung für die Scheibenwaschflüssigkeit am Flüssigkeitskreislauf der Motorkühlung in Kraftfahrzeugen, mit zumindest einer Wärmetauscherschlange aus Metallrohr, die schraubenförmig um den Kühlflüssigkeitskanal herumgewickelt ist, wobei der Kühlflüssigkeits-Kreislauf eine Verzweigungs- und/oder Verbindungsvorrichtung für flexible Rohre (2) und (3) besitzt, die zwischen einem starren innenliegenden Rohrstutzen (1) und einer äußeren Ummantelung (6) angeordnet sind, wobei die Ummantelung aus elastomerem thermoplastischen oder wärmehärtbaren Polymeren besteht, dadurch gekennzeichnet, daß die Wärmetauscherschlange(7) oder (17), die um den innenliegenden Rohrstutzen (1) angeordnet ist, in Polymermaterial eingebettet ist, das die äußere Ummantelung (6) bildet.

2. Vorwärmeeinrichtung für Scheibenwaschflüssigkeit nach Anspruch 1, dadurch gekennzeichnet, daß die Wärmetauschschlange (7) oder (17) als Anschlag für die beiden durch den innenliegenden starren Rohrstutzen (1) verbundenen flexiblen Rohre (2) und (3) vor dem Einbetten im Polymermaterial dient, das so zylindrische Schultern (5) zum Festlegen der flexiblen Rohre (2) und (3) bildet.

3. Vorwärmeeinrichtung für Scheibenwaschflüssigkeit nach Anspruch 1, dadurch gekennzeichnet, daß die Wärmetauscherschlange (17) aus zwei Schraubenwicklungen starrer Rohre besteht, die durch eine T-Verbindung mittels eines Verbindungsstücks (18') für den Scheibenwaschflüssigkeits-Kreislauf zueinander parallel geschaltet sind.

4. Vorwärmeeinrichtung für Scheibenwaschflüssigkeit nach einem der Ansprüche 1 bis 3, dadurch gekennzeichnet, daß bei einer aus einem thermoplastischen Polymeren beachtlichen Wärmeschwunds bestehenden äußeren Ummantelung (6) Einschnürungen (11) an der Außenfläche der äußeren Ummantelung (6) dafür vorgesehen sind, die Unterschiede der elastischen Verformbarkeit zwischen den Bereichen über den flexiblen Rohren (2) und (3) und über dem zylindrischen Mittelstück (12) auszugleichen, in das die Wärmetauscherschlange (7) oder (17) eingebettet ist.

## Claims

1. A heater for screen-wash liquid, on the cooling liquid circuit of the engine of a motor vehicle, composed of at least one exchanger coil made of a metal tube wound spirally around the channel in which the cooling liquid circulates, said circuit cdmprising a device for branching off and/or connecting flexible conduits (2) and (3) fitted between a rigid inner pipe (1) and an outer covering element (6) made of a polymeric material of an elastomeric, thermoplastic or thermosetting nature, said screen-wash liquid heater being characterised in that said exchanger coil (7) or (17), disposed around the rigid inner pipe (1) is embedded within the polymeric material constituting the outer covering element (6).

2. A heater for screen-wash liquid according to Claim 1, characterised in that the exchanger coil (7) or (17) serves as a limit stop for the two flexible conduits (2) and (3) connected by said rigid inner pipe (1), before being embedded in the polymeric material which then forms the cylindrical shoulder (5) serving to confine said flexible conduits (2) and (3).

3. A heater for screen-wash liquid according to Claim 1, characterised in that the exchanger coil (17) is composed of two helices of rigid tube operating in parallel owing to their T-shaped connection by a joining piece (18') to the screen-wash liquid circuit.

4. A heater for screen-wash liquid according to Claims 1 to 3, characterised in that grooves (11) on the external surface of the outer covering element (6) allow compensation for the differences in elastic deformability in the areas where the flexible conduits (2) and (3) are covered and in the central cylindrical part (12) containing, embedded, the exchanger coil (7) or (17) when the outer covering element (6) is composed of a thermoplastic polymeric material with significant thermal contraction.
